# EUROPEAN PATENT APPLICATION

(11) **EP 3 147 855 A1**
(43) Date of publication of application: **29.03.2017**
(21) Application number: 16157487.6
(22) Date of filing: 25.02.2016
(51) Int. Cl.: G06Q 30/06, G06Q 30/02

(54) **CONTROL APPARATUS, IMAGE PROCESSING APPARATUS, CONTROL METHOD, AND PROGRAM**

(30) Priority: 25.09.2015 JP 2015188309
(71) Applicant: Fuji Xerox Co., Ltd., Minato-ku, Tokyo (JP)
(72) Inventor: KAIBARA, Kohei, Yokohama-shi, Kanagawa (JP); MASUDA, Kensaku, Yokohama-shi, Kanagawa (JP); YAMAMOTO, Hiroshi, Yokohama-shi, Kanagawa (JP); HOTTA, Keiichi, Yokohama-shi, Kanagawa (JP); KAWANO, Haruko, Yokohama-shi, Kanagawa (JP); MISHIMA, Mika, Yokohama-shi, Kanagawa (JP); SUGIURA, Atsushi, Yokohama-shi, Kanagawa (JP)
(74) Representative: Ward, James Norman

(57) **Abstract**

A control apparatus includes an identifying unit, an accepting unit, and a display controller. The identifying unit identifies a user and an attribute of the user. The accepting unit accepts designation of a time zone from the user. The display controller displays, on a display, information indicating a fee in a case where the user causes an execution unit to execute a process, the execution unit executing a process at a fee in accordance with a time zone and an attribute.

## Description

### BACKGROUND

### (i) Technical Field

The present invention relates to a control apparatus, an image processing apparatus, a control method and a program.

### (ii) Related Art

Japanese Unexamined Patent Application Publication No. 2009-267938 discloses a liquid crystal operation unit that has a copy fee display screen presenting to a user a unit price for each image processing service as the currently set fee charging information (paragraph 26).

### SUMMARY

It is an object of the present invention to enable a user to browse information indicating a fee for each time zone in the case where the user causes an execution unit to execute a process, even in other time zones.

According to a first aspect of the present invention, there is provided a control apparatus including an identifying unit, an accepting unit, and a display controller. The identifying unit identifies a user and an attribute of the user. The accepting unit accepts designation of a time zone from the user. The display controller displays, on a display, information indicating a fee in a case where the user causes an execution unit to execute a process, the execution unit executing a process at a fee in accordance with a time zone and an attribute.

According to a second aspect of the present invention, the control apparatus further includes a memory that stores the information indicating a fee. The display controller obtains the information from a server apparatus in a case where the memory does not store the information. In a case where the memory stores the information and the server apparatus includes information newer than the information, the display controller obtains the new information from the server apparatus and displays the new information.

According to a third aspect of the present invention, the control apparatus further includes an evaluating unit that evaluates multiple time zones by comparing the information indicating a fee for each of the multiple time zones. The display controller displays, on the display, the multiple time zones in an order, color, or size according to evaluation performed by the evaluating unit.

According to a fourth aspect of the present invention, the accepting unit accepts, from the user, designation of a process to be executed by the execution unit, and the evaluating unit evaluates the multiple time zones in accordance with the process indicated in the designation accepted by the accepting unit.

According to a fifth aspect of the present invention, there is provided an image processing apparatus including an identifying unit, an accepting unit, an execution unit, and a display controller. The identifying unit identifies a user and an attribute of the user. The accepting unit accepts designation of a time zone from the user. The execution unit executes, in response to an instruction from the user, a process of forming an image on a medium or a process of reading an image formed on a medium. The display controller displays, on a display, information indicating a fee in a case where a user who has the identified attribute causes the execution unit to execute a process in the time zone indicated in the accepted designation.

According to a sixth aspect of the present invention, the image forming apparatus further includes a memory that stores the information indicating a fee. The display controller obtains the information from a server apparatus in a case where the memory does not store the information. In a case where the memory stores the information and the server apparatus includes information newer than the information, the display controller obtains the new information from the server apparatus and displays the new information.

According to a seventh aspect of the present invention, the image forming apparatus further includes an evaluating unit that evaluates multiple time zones by comparing the information indicating a fee for each of the multiple time zones. The display controller displays, on the display, the multiple time zones in an order, color, or size according to evaluation performed by the evaluating unit.

According to an eighth aspect of the present invention, the accepting unit accepts, from the user, designation of a process to be executed by the execution unit, and the evaluating unit evaluates the multiple time zones in accordance with the process indicated in the designation accepted by the accepting unit.

According to a ninth aspect of the present invention, there is provided a control method performed by a computer. The method includes: identifying a user and an attribute of the user; accepting designation of a time zone from the user; and displaying, on a display, information indicating a fee in a case where the user causes an execution unit to execute a process, the execution unit executing a process at a fee in accordance with a time zone and an attribute.

According to a tenth aspect of the present invention, the computer includes a memory that stores the information indicating a fee. The displaying obtains the information from a server apparatus in a case where the memory does not store the information. In a case where the memory stores the information and the server apparatus includes information newer than the information, the displaying obtains the new information from the server apparatus and displays the new information.

According to an eleventh aspect of the present invention, the control method further includes: evaluating multiple time zones by comparing the information indicating a fee for each of the multiple time zones. The displaying displays, on the display, the multiple time zones in an order, color, or size according to evaluation performed by the evaluating.

According to a twelfth aspect of the present invention, the accepting accepts, from the user, designation of a process to be executed by the execution unit, and the evaluating evaluates the multiple time zones in accordance with the process indicated in the designation accepted by the accepting.

According to a thirteenth aspect of the present invention, there is provided a program causing a computer to function as: an identifying unit that identifies a user and an attribute of the user; an accepting unit that accepts designation of a time zone from the user; and a display controller that displays, on a display, information indicating a fee in a case where the user causes an execution unit to execute a process, the execution unit executing a process at a fee in accordance with a time zone and an attribute.

According to the first, fifth, ninth, and thirteenth aspects of the present invention, information indicating a fee for each time zone in a case where the user causes an execution unit to execute a process may be browsed even in other time zones.

According to the second, sixth, and tenth aspects of the present invention, in a case where the information indicating a fee is updated in the server apparatus, the updated information may be obtained.

According to the third, seventh, and eleventh aspects of the present invention, the user may browse multiple time zones in an order, color, or size according to a result of evaluation performed on the information indicating a fee for each time zone.

According to the fourth, eighth, and twelfth aspects of the present invention, the user may browse multiple time zones in an order, color, or size according to a result of evaluation performed on information indicating a fee for each time zone in a case where a designated process is executed.

### BRIEF DESCRIPTION OF THE DRAWINGS

An exemplary embodiment of the present invention will be described in detail based on the following figures, wherein:
Fig. 1 is a diagram illustrating the overall configuration of an image processing system according to an exemplary embodiment of the present embodiment;
Fig. 2 is a diagram illustrating the configuration of a fee settlement server;
Fig. 3 is a diagram illustrating an example of a balance database (DB);
Fig. 4 is a diagram illustrating the configuration of a fee information server;
Fig. 5 is a diagram illustrating an example of a fee DB;
Fig. 6 is a diagram illustrating the configuration of an image processing apparatus;
Fig. 7 is a diagram illustrating an example of a user DB;
Fig. 8 is a diagram illustrating an example of an apparatus DB;
Fig. 9 is a diagram illustrating an example of a fee DB;
Fig. 10 is a diagram illustrating the functional configuration of the image processing apparatus;
Fig. 11 is a flowchart illustrating an operation until updating necessary for information on a fee for the image processing apparatus is performed;
Fig. 12 is a flowchart illustrating an operation when the image processing apparatus accepts designation of a time zone; and
Figs. 13A and 13B are diagrams illustrating examples of a fee table displayed on a display.

### DETAILED DESCRIPTION

### 1. Exemplary Embodiment

### 1-1. Overall Configuration of Image Processing System

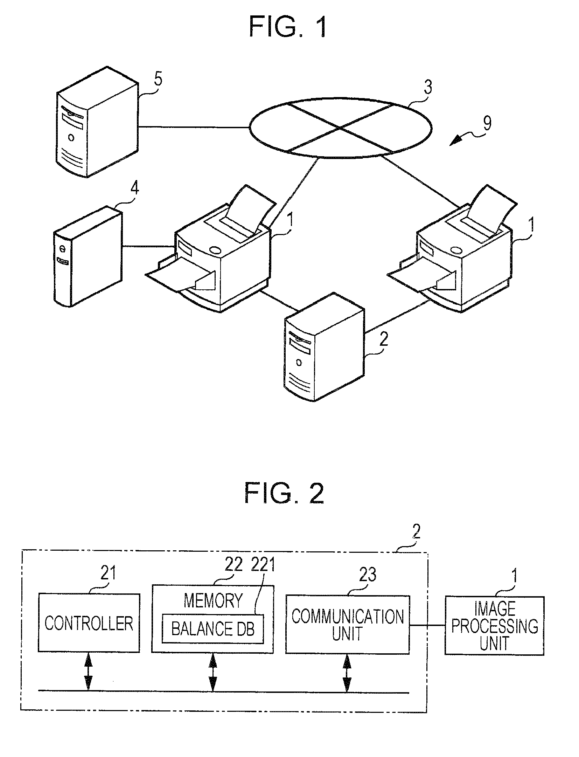

Fig. 1 is a diagram illustrating the overall configuration of an image processing system 9 according to an exemplary embodiment of the present embodiment. As illustrated in Fig. 1, the image processing system 9 includes multiple image processing apparatuses 1, a fee settlement server 2, a communication line 3, and a fee information server 5. The communication line 3 is a public line that relays communication performed between each of the image processing apparatuses 1 and the fee settlement server 2, and is the Internet, for example. Note that a dedicated line, instead of a public line, may be used as the communication line 3.

Each image processing apparatuses 1 is an apparatus that allows a user to use an execution unit that executes a process at a fee in accordance with a usage time zone and the attribute of the user. The execution unit executes a process of forming an image, a process of reading an image formed on a medium, or the like. A fee charged for the process to the user changes in accordance with a time zone in which the process is executed (or a designated time zone) and the attribute of the user.

A fee adjustment machine 4 for adjusting and settling a fee for a process executed on each image processing apparatus 1 may be connected to the image processing apparatus 1. Note that the image processing system 9 may include multiple fee settlement servers 2, or may include no fee settlement server 2. In the case where the image processing system 9 includes no fee settlement server 2, the user may adjust and settle a fee using, for example, the fee adjustment machine 4 connected to the image processing apparatus 1.

The fee adjustment machine 4 is an apparatus that collects a fee from the user, and exchanges information indicating the fee adjustment and settlement status with the image processing apparatus 1. The fee adjustment machine 4 is, for example, a coin acceptor that collects a fee in cash. Alternatively, the fee adjustment machine 4 may be a magnetic card reader/writer that collects a fee via a magnetic card, or an integrated circuit (IC) card reader/writer that collects a fee via an IC card. The image processing apparatus 1 may execute a process in accordance with the fee adjustment and settlement status at the fee adjustment machine 4.

### 1-2. Configuration of Fee Settlement Server

Fig. 2 is a diagram illustrating the configuration of the fee settlement server 2. The fee settlement server 2 is a server apparatus that collects a fee for a process that the user causes the image processing apparatus 1 to execute. A controller 21 includes a central processing unit (CPU), a read-only memory (ROM), and a randomaccess memory (RAM), and controls each unit of the fee settlement server 2 by reading and executing, by the CPU, a computer program (hereinafter simply referred to as a "program") stored in the ROM or a memory 22.

A communication unit 23 is an interface for communicating with the image processing apparatus 1 via various financial networks such as the Japanese Bankers Association network and Credit And Finance Information System (CAFIS).

The memory 22 is a large-capacity memory such as a hard disk drive, and stores a program read by the CPU of the controller 21.

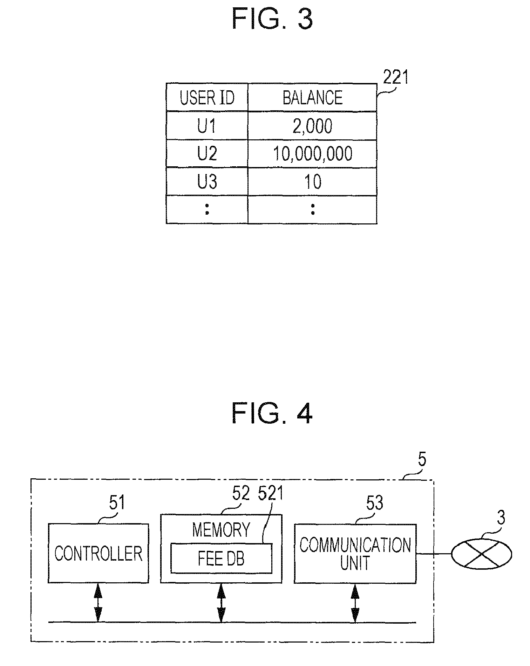

The memory 22 also stores a balance DB 221. The balance DB 221 is a database that stores, for each user's user ID, a deposit balance which indicates assets held by the user. Fig. 3 is a diagram illustrating an example of the balance DB 221. For example, in the balance DB 221 illustrated in Fig. 3, a user with the user ID "U1" has a balance of "2,000 yen", and a user with the user ID "U2" has a balance of "10,000,000 yen".

On receipt of a request from the image processing apparatus 1, the controller 21 performs settlement by rewriting the balance DB 221 stored in the memory 22. For example, the balance DB 221 stores, as the user ID, identification information on the owner of the image processing apparatus 1 in association with the user's deposit balance. When the user causes the image processing apparatus 1 to execute a process, the image processing apparatus 1 transmits information indicating a fee for the process to the fee settlement server 2. On receipt of the information indicating the fee, the controller 21 subtracts the fee from the user's deposit described above, and adds the resultant amount to the balance of the owner of the image processing apparatus 1.

### 1-3. Configuration of Fee Information Server

Fig. 4 is a diagram illustrating the configuration of the fee information server 5. The fee information server 5 is a server apparatus that provides, in response to a request from the image processing apparatus 1, information on a fee for a process executed on the image processing apparatus 1. A controller 51 includes a CPU, a ROM, and a RAM, and controls each unit of the fee information server 5 by reading and executing, by the CPU, a program stored in a memory 52. A communication unit 53 is an interface for communicating with another image processing apparatus 1 via the communication line 3.

The memory 52 is a large-capacity memory such as a hard disk drive, and stores a program read by the CPU of the controller 51. The memory 52 additionally stores a fee DB 521 in which information on a fee for a process executed on the image processing apparatus 1 is described for each user attribute and for each time zone where a process is executed.

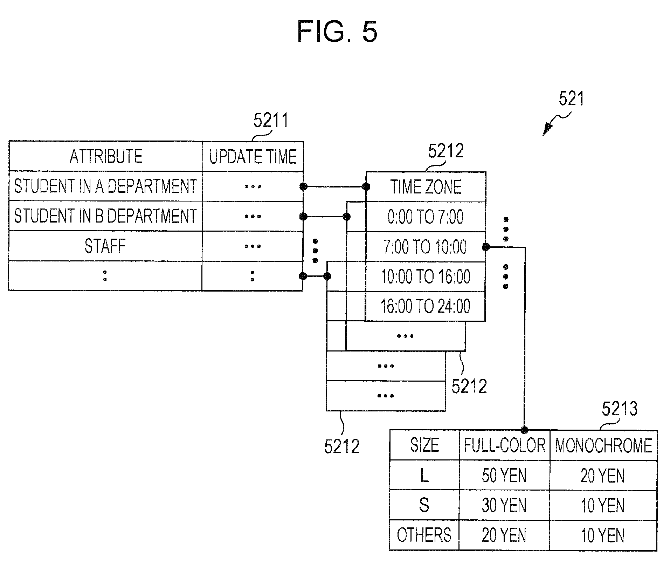

Fig. 5 is a diagram illustrating an example of the fee DB 521. The fee DB 521 is a database that has an attribute list 5211, a time zone list 5212, and a fee table 5213. The attribute list 5211 is a list of user attributes. A fee for a process executed on the image processing apparatus 1 is determined for each attribute of a user who has designated that process.

An "attribute" is set for each of the user's social characteristics including position, class, and nationality, ability characteristics including a qualification and expertise, and physical characteristics including age, sex, height, and weight. For example, attributes include "student in A department", "student in B department", and "staff", and fees are set in such a manner that a fee charged to staff is cheaper than a fee charged to a student, or a process is free of charge for staff. An "update time" is described in association with each "attribute". In the fee DB 521, fee information is updated for each user attribute, and the time at which the fee information is updated is described in the "update time". Updating of the fee DB 521 is performed in response to an instruction sent from an operation unit (not illustrated), or from an information terminal (not illustrated) via the communication line 3.

In addition, a fee is set for each time zone in the fee DB 521. The time zone list 5212 is a list of multiple time zones in which different fees are set for users with a certain attribute. For example, for "student in A department", one day is divided into four time zones, "0:00 to 7:00", "7:00 to 10:00", "10:00 to 16:00", and "16:00 to 24:00". Note that this division may be common to all attributes.

The fee table 5213 is a table in which, when a process is caused by a user with a certain attribute to be executed in a certain time zone, a fee for each detail of the process is described. A process designated by a user has various modes. For example, in the case of a process of forming an image on a medium, various modes include the size of a medium such as paper, and the number of colors of developers used in forming an image. The fee table 5213 describes fees in accordance with combinations of the attributes, time zone, and details. For example, when a user with the attribute "student in A department" forms a "full-color" image on paper with the size "L" in the time zone "7:00 to 10:00", a fee of 50 yen per sheet is incurred in the example illustrated in Fig. 5.

### 1-4. Configuration of Image Processing Apparatus

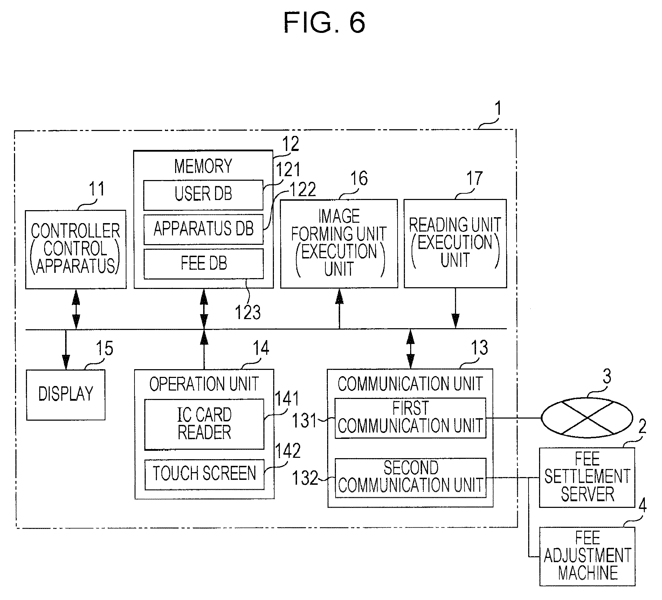

Fig. 6 is a diagram illustrating the configuration of the image processing apparatus 1. A controller 11 includes a CPU, a ROM, and a RAM, and controls each unit of the image processing apparatus 1 by reading and executing, by the CPU, a program stored in the ROM or a memory 12. The controller 11 is an example of a "control apparatus" according to an exemplary embodiment of the present invention.

A communication unit 13 includes a first communication unit 131 that is an interface for communicating with the fee information server 5 via the communication line 3, and a second communication unit 132 that is an interface for communicating with the fee adjustment machine 4 and the fee settlement server 2.

An operation unit 14 includes operators such as operation buttons for giving various instructions. The operation unit 14 accepts an operation performed by the user, and supplies a signal in accordance with the details of the operation to the controller 11.

The operation unit 14 additionally includes an IC card reader 141 that reads information transmitted from a contactless IC card that conforms to, for example, the International Organization for Standardization (ISO)/International Electrotechnical Commission (IEC) 18092 standard, and a touch screen 142 that detects a position at which a contacting body such as the user's finger contacts, and identifies an instruction given by the user.

A display 15 includes a liquid crystal display, and displays various types of information designated by the controller 11. The above-described touch screen 142 may be arranged over the display 15. In this case, the touch screen 142 is formed of a transparent material such that the user is able to see an image displayed on the liquid crystal display of the display 15.

An image forming unit 16 is, for example, an electrophotographic printer, and forms an image on a medium such as paper under control of the controller 11. The image forming unit 16 is an example of the "execution unit" according to the exemplary embodiment of the present invention.

A reading unit 17 is, for example, an optical scanner, and reads an image formed on a medium such as paper under control of the controller 11. The reading unit 17 is an example of the "execution unit" according to the exemplary embodiment of the present invention.

The memory 12 is a large-capacity memory such as a hard disk drive, and stores a program read by the CPU of the controller 11. The memory 12 additionally stores a user DB 121, an apparatus DB 122, and a fee DB 123.

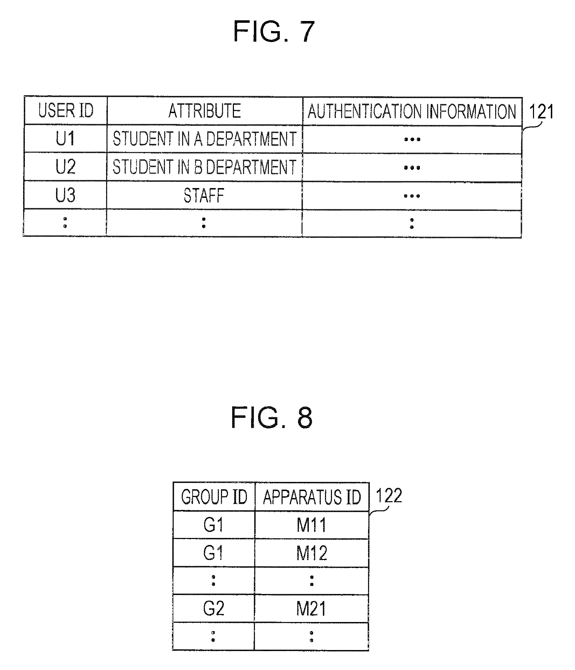

Fig. 7 is a diagram illustrating an example of the user DB 121. The user DB 121 is a database that associatively describes a user ID indicating identification information on a user, the attribute of the user, and authentication information used in authenticating the user.

Fig. 8 is a diagram illustrating an example of the apparatus DB 122. The apparatus DB 122 is a database that associatively describes an apparatus ID which is identification information assigned to each of the image processing apparatuses 1, and a group ID which is identification information on a group to which the image processing apparatus 1 identified by the apparatus ID belongs.

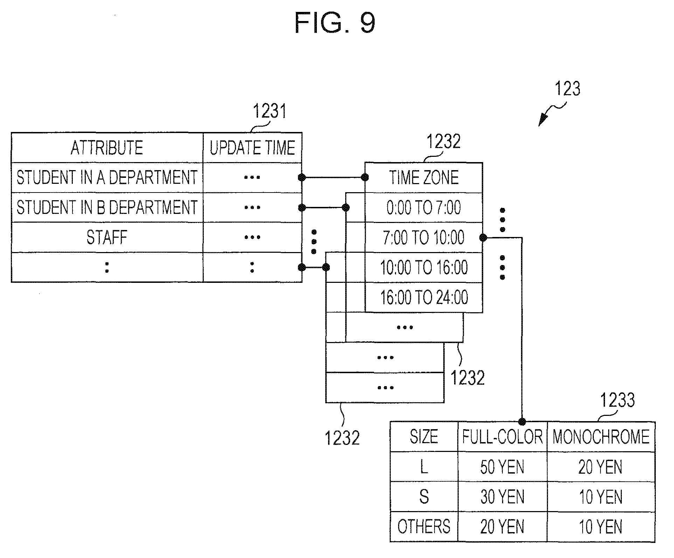

Fig. 9 is a diagram illustrating an example of the fee DB 123. The fee DB 123 is a database that has a configuration common to the fee DB 521 stored in the memory 52 of the above-mentioned fee information server 5, and includes an attribute list 1231, a time zone list 1232, and a fee table 1233 corresponding to the attribute list 5211, the time zone list 5212, and the fee table 5213, respectively. For an update time corresponding to a certain attribute, the controller 11 or the controller 51 compares information described in the fee DB 123 in the memory 12 with information described in the fee DB 521 in the memory 52 of the fee information server 5.

In the case where the update time described in the fee DB 521 is newer than the update time described in the fee DB 123, the controller 11 obtains the time zone list 5212 corresponding to the above-mentioned attribute in the fee DB 521, and multiple fee tables 5213 corresponding to time zones described in this time zone list 5212 from the fee information server 5, and, using the obtained data, updates the fee DB 123.

In this case, the update time described in the attribute list 1231 may be a corresponding update time described in the attribute list 5211 or may be a time at which the fee DB 123 is updated. In short, after the update process, until the fee DB 521 is updated, it is only necessary for the update time described in the fee DB 521 be newer than the update time described in the fee DB 123.

### 1-5. Functional Configuration of Image Processing Apparatus

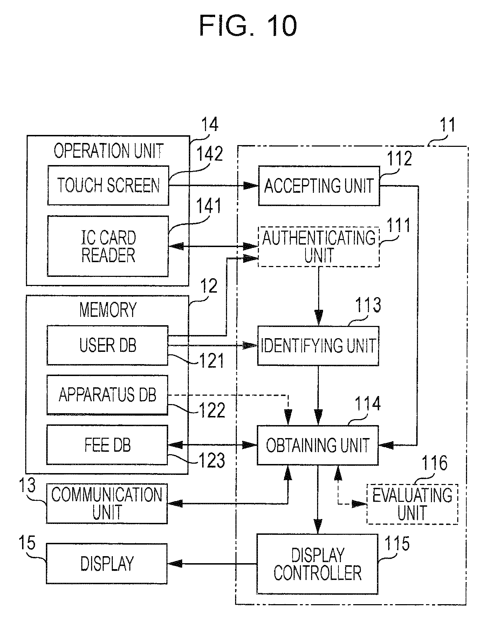

Fig. 10 is a diagram illustrating the functional configuration of the image processing apparatus 1. By executing a program stored in the memory 12, the controller 11 of the image processing apparatus 1 functions as an authenticating unit 111, an accepting unit 112, an identifying unit 113, an obtaining unit 114, and a display controller 115.

The IC card reader 141 reads, from an IC card owned by a user, that user's user ID and authentication information. The authenticating unit 111 performs an authentication process of authenticating whether the user is verified or not by comparing a pair of the user ID and the authentication information read by the IC card reader 141 with a pair of a user ID and authentication information described in the user DB 121.

The identifying unit 113 refers to the user DB 121, and identifies the user ID of the user who has been verified (authenticated as a legitimate user) by the authenticating unit 111, and that user's attribute.

The accepting unit 112 accepts designation of a time zone from the user whose user ID has been identified by the identifying unit 113, via the touch screen 142.

The obtaining unit 114 refers to the fee DB 123, and obtains information indicating a fee for a process caused by the user with the attribute identified by the identifying unit 113, to be executed using the image forming unit 16 and/or the reading unit 17 (execution unit) in a time zone indicated in the designation accepted by the accepting unit 112. In addition, the obtaining unit 114 connects to the fee information server 5 via the communication unit 13, and, in the referenced fee DB 123, in the case where information on a fee charged to the user who has the attribute identified by the identifying unit 113 is older than corresponding information in the fee information server 5, obtains new fee information from the fee information server 5.

The display controller 115 displays, on the display 15, the information obtained by the obtaining unit 114. Note that the display controller 115 may include the above-described obtaining unit 114. That is, it is only necessary for the display controller 115 to be one that displays, on a display, information indicating a fee in the case where the user causes the execution unit, which executes a process at a fee in accordance with a time zone and an attribute, to execute a process.

### 1-6. Operation of Image Processing Apparatus

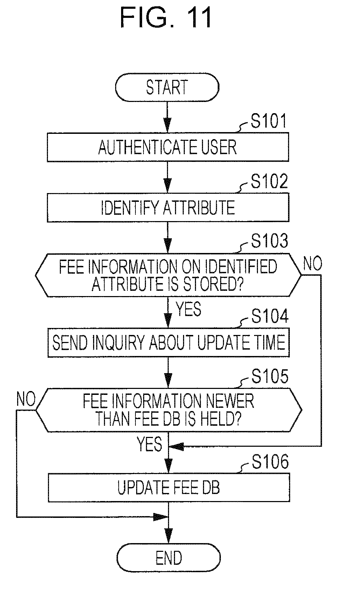

The operation of the image processing apparatus 1 will be described. Fig. 11 is a flowchart illustrating an operation until updating necessary for information on a fee associated with the user of the image processing apparatus 1 is performed. When the user places his/her IC card over the IC card reader 141, the operation unit 14 conveys the user ID and the authentication information read by the IC card reader 141 to the controller 11. The controller 11 of the image processing apparatus 1 authenticates the user by comparing a pair of the user ID and the authentication information read by the IC card reader 141 with a pair of a user ID and authentication information described in the user DB 121 (step S101).

The controller 11 searches the user DB 121 for the user ID of the user, determined to be a legitimate user by the authentication, and identifies the user's attribute (step S102). The controller 11 refers to the fee DB 123, and determines whether fee information on the identified attribute is stored (step S103). In the case where it is determined that no fee information on the identified attribute is stored (NO in step S103), the controller 11 proceeds the process to step S106 (described later), and obtains fee information from the fee information server 5.

In contrast, in the case where it is determined that fee information on the identified attribute is stored (YES in step S103), an update time described in association with the attribute is transmitted to the fee information server 5 via the communication line 3, and an inquiry is sent to the fee information server 5 about whether the fee DB 521 is holding, in association with the attribute, fee information in which an update time newer than the transmitted update time is described (step S104).

The controller 11 receives, from the fee information server 5, a response to the inquiry. On the basis of the response, it is determined whether the fee information server 5 is holding fee information newer than that in the fee DB 123 (step S105).

In the case where it is determined that the fee information server 5 is holding no fee information newer than that in the fee DB 123 (NO in step S105), the controller 11 ends the process. In contrast, in the case where it is determined that the fee information server 5 is holding fee information newer than that in the fee DB 123 (YES in step S105), the controller 11 obtains fee information corresponding to the above-described attribute from the fee information server 5, updates the fee DB 123 (step S106), and ends the process. Note that the term "update" in this case refers to "create new" in the case where the fee DB 123 stores no fee information to be updated.

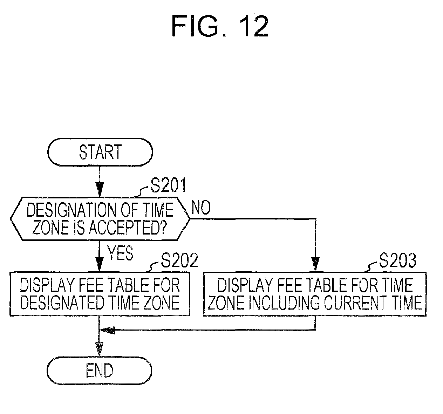

Fig. 12 is a flowchart illustrating an operation when the image processing apparatus 1 accepts designation of a time zone from the user. The controller 11 determines whether the touch screen 142 of the operation unit 14 has accepted the user's designation of a time zone (step S201). In the case where it is determined that the user's designation of a time zone has been accepted (YES in step S201), the controller 11 refers to the fee DB 123 and displays, on the display 15, a fee table in the case where the user with the above-described attribute causes the execution unit such as the image forming unit 16 to execute a process in the designated time zone (step S202).

In contrast, in the case where it is determined that the user's designation of a time zone has not been accepted (NO in step S201), the controller 11 extracts a fee table of a time zone including the current time, which is defined for the user with the above-described attribute, from the fee DB 123, and displays the fee table on the display 15 (step S203).

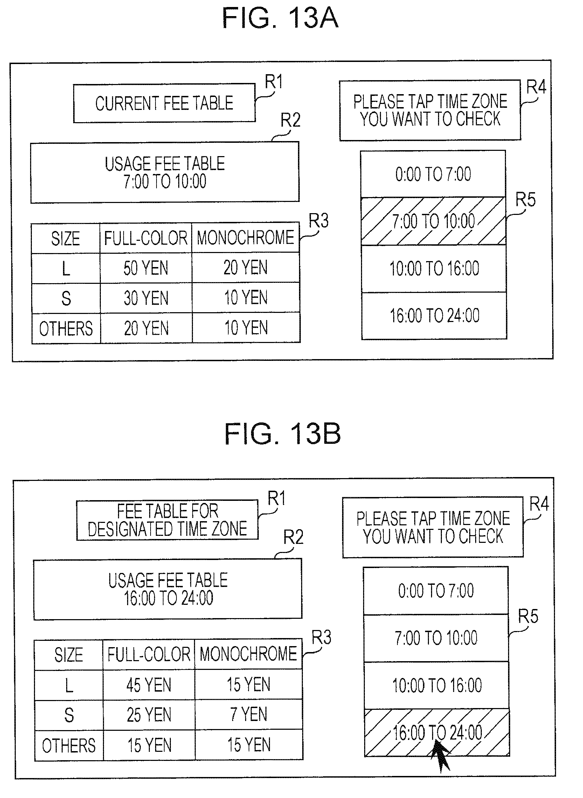

Figs. 13A and 13B are diagrams illustrating examples of a fee table displayed on the display 15. The details illustrated in Fig. 13A are displayed on the display 15 in the case where a user U1, who is a student in A department, starts using the image processing apparatus 1 at 8 AM without designating a time zone. The details illustrated in Fig. 13B are displayed on the display 15 in the case where the user U1 designates a time zone.

In step S203 illustrated in Fig. 12, since no time zone has been designated by the user, the controller 11 of the image processing apparatus 1 sets a time zone in a fee table to be displayed to a time zone including the current time, and obtains a fee table from the fee DB 123. The time zone of the fee table displayed in Fig. 13A is set to "7:00 to 10:00" including 8 AM.

The screen of the display 15 includes regions R1 to R5. The region R1 displays a title indicating what is displayed. In Fig. 13A, the character string "Current fee table" is displayed in the region R1.

The region R2 displays a time zone set as a time zone of a fee table to be displayed. In this case, the time at which the user starts using the image processing apparatus 1 without designating a time zone is 8 AM; thus, a time zone including 8 AM is selected. That is, the region R2 displays "Usage fee table/7:00 to 10:00".

The region R3 displays a fee table for the time zone displayed in the region R2. The region R4 displays a character string prompting the user to designate a time zone, such as "Please tap the time zone you want to check". The region R5 displays a list of time zones that the user is able to designate. In the list of time zones, a time zone selected by the controller 11 is displayed distinctively from the other time zones, such as in a different color.

In this case, when the user U1 designates the time zone "16:00 to 24:00", as illustrated in Fig. 13B, the region R1 displays the character string "Fee table for the designated time zone". The region R2 displays "Usage fee table/16:00 to 24:00", and the region R3 displays the fee table for the time zone displayed in the region R2. The region R5 displays in color the fact that the selected time zone has been changed from "7:00 to 10:00" to "16:00 to 24:00".

With the configuration, information indicating a fee for each time zone when the user causes the execution unit to execute a process is browsed in other time zones in response to that user's operation.

### 2. Modifications

Although the exemplary embodiment has been described as above, the details of the exemplary embodiment may be modified as follows. In addition, the following modifications may be combined.

### 2-1. First Modification

In the above-described exemplary embodiment, the controller 11 refers to the fee DB 123 and determines whether fee information on the identified attribute has been stored. Alternatively, the memory 12 may not store the fee DB 123. In this case, the controller 11 may obtain fee information from the fee information server 5 whenever the attribute of the user is identified.

### 2-2. Second Modification

In the above-described exemplary embodiment, the region R5 chronologically displays a list of time zones that the user is able to designate. Alternatively, the time zones may be rearranged in accordance with the user's purpose. In this case, the controller 11 may function as an evaluating unit 116 indicated by a broken line in Fig. 10. The evaluating unit 116 evaluates multiple time zones on the basis of a predetermined standard by comparing fee tables for the time zones.

For example, the evaluating unit 116 may compare average fees described in fee tables for time zones, and the display controller 115 may rearrange corresponding time zones in ascending order of average fees. In the example illustrated in Fig. 13A, the fee table for the time zone "7:00 to 10:00" indicates six prices, namely, 50 yen, 30 yen, 20 yen, 20 yen, 10 yen, and 10 yen; the arithmetic mean of these prices is about 23.3 yen. In contrast, in the example illustrated in Fig. 13B, the fee table for the time zone "16:00 to 24:00" indicates six prices, namely, 45 yen, 25 yen, 15 yen, 15 yen, 7 yen, and 15 yen; the arithmetic mean of these prices is about 20.3 yen. Therefore, the evaluating unit 116 rearranges the time zones such that "16:00 to 24:00" comes before "7:00 to 10:00".

With this configuration, a cheaper average price is displayed first. The user is able to understand which time zone may reduce costs when using the image processing apparatus 1, without looking at all the fee tables.

As has been described above, the evaluation result may be reflected in rearranging the time zones by the display controller 115. Instead of reflecting the evaluation result in rearranging the time zones, the evaluation result may be reflected in, for example, the color, size, brightness, or the speed of lighting the characters or buttons displaying the time zones in such a manner as to enable the user to understand the evaluation of each time zone.

In addition, the display controller 115 may only display, on the display 15, a time zone where the fees are cheapest in distinction from the other time zones. Although the display controller 115 rearranges the evaluated time zones in ascending order of fees, the display controller 115 may rearrange the time zones in descending order of fees. In short, it is only necessary for the user to understand the evaluation of each time zone.

### 2-3. Third Modification

The evaluating unit 116 mentioned in the second modification may evaluate the time zones in accordance with a designated process accepted from the user. For example, the evaluating unit 116 may compare fees for the time zones when the user causes the execution unit (image forming unit 16 or reading unit 17) of the image processing apparatus 1 to execute a designated process, and the display controller 115 may rearrange corresponding time zones in ascending order of fees.

When the user designates forming a full-color image on L-size paper, if a process in accordance with the designation is executed in the time zone "7:00 to 10:00", the fee is 50 yen in the example illustrated in Fig. 13A. In contrast, if this process in accordance with the designation is executed in the time zone "16:00 to 24:00", the fee is 45 yen in the example illustrated in Fig. 13B. Therefore, in the case where "forming a full-color image on L-size paper" is designated, the evaluating unit 116 rearranges the time zones such that "16:00 to 24:00" comes before "7:00 to 10:00".

However, when the user designates forming a monochrome image on paper other than L-size or S-size paper, the fee is 10 yen in the time zone "7:00 to 10:00" and is 15 yen in the time zone "16:00 to 24:00". Therefore, in the case where "forming a monochrome image on other paper" is designated, the evaluating unit 116 rearranges the time zones such that "16:00 to 24:00" comes after "7:00 to 10:00".

With this configuration, even in the case where the evaluations of the time zones change in accordance with the details of a designated process, the user understands the evaluations of the time zones.

### 2-4. Fourth Modification

The memory 52 of the fee information server 5 may store the fee DB 521 in which information on a fee for a process executed on the image processing apparatus 1 is described for each user attribute, each time zone where a process is executed, and each group to which the image processing apparatus 1 belongs. In this case, the obtaining unit 114 reads the apparatus ID, stored in the memory 12, of the image processing apparatus 1, obtains a group ID associated with the apparatus ID from the apparatus DB 122, and requests, via the communication unit 13, the fee information server 5 to compare the update date and time of information associated with the group ID in the fee DB 521 with the update date and time of corresponding information in the fee DB 123. When the comparison result indicates that the information stored in the fee DB 521 is newer than that in the fee DB 123, the obtaining unit 114 simply obtains that new information from the fee information server 5.

### 2-5. Fifth Modification

Although the image processing apparatus 1 includes the image forming unit 16, the image processing apparatus 1 may be configured to be connected to an external image forming unit. In this case, the image processing system 9 may include an image processing apparatus (control apparatus) including no image forming unit, instead of the image processing apparatus 1.

In addition, the external apparatus to which this image processing apparatus connects is not limited to an image forming unit, and may be any apparatus as long as it performs a process of some sort under control of the image processing apparatus.

### 2-6. Sixth Modification

A program executed by the controller 11 of the image processing apparatus 1 may be provided while being stored in a computer-readable recording medium including a magnetic recording medium such as a magnetic tape or a magnetic disk, an optical recording medium such as an optical disk, a magneto-optical recording medium, or a semiconductor memory. The program may be downloaded via the Internet or the like. Note that various apparatuses other than a CPU may be applied to a controller exemplified by the above-mentioned controller 11, and a dedicated processor may be used, for example.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A control apparatus comprising:
an identifying unit that identifies a user and an attribute of the user;
an accepting unit that accepts designation of a time zone from the user; and
a display controller that displays, on a display, information indicating a fee in a case where the user causes an execution unit to execute a process, the execution unit executing a process at a fee in accordance with a time zone and an attribute.

2. The control apparatus according to Claim 1, further comprising:
a memory that stores the information indicating a fee,
wherein the display controller obtains the information from a server apparatus in a case where the memory does not store the information, and
in a case where the memory stores the information and the server apparatus includes information newer than the information, the display controller obtains the new information from the server apparatus and displays the new information.

3. The control apparatus according to Claim 1 or 2, further comprising:
an evaluating unit that evaluates a plurality of time zones by comparing the information indicating a fee for each of the plurality of time zones,
wherein the display controller displays, on the display, the plurality of time zones in an order, color, or size according to evaluation performed by the evaluating unit.

4. The control apparatus according to Claim 3, wherein
the accepting unit accepts, from the user, designation of a process to be executed by the execution unit, and
the evaluating unit evaluates the plurality of time zones in accordance with the process indicated in the designation accepted by the accepting unit.

5. An image processing apparatus comprising:
an identifying unit that identifies a user and an attribute of the user;
an accepting unit that accepts designation of a time zone from the user;
an execution unit that executes, in response to an instruction from the user, a process of forming an image on a medium or a process of reading an image formed on a medium; and
a display controller that displays, on a display, information indicating a fee in a case where a user who has the identified attribute causes the execution unit to execute a process in the time zone indicated in the accepted designation.

6. The image forming apparatus according to Claim 5, further comprising:
a memory that stores the information indicating a fee,
wherein the display controller obtains the information from a server apparatus in a case where the memory does not store the information, and
in a case where the memory stores the information and the server apparatus includes information newer than the information, the display controller obtains the new information from the server apparatus and displays the new information.

7. The image forming apparatus according to Claim 5 or 6, further comprising:
an evaluating unit that evaluates a plurality of time zones by comparing the information indicating a fee for each of the plurality of time zones,
wherein the display controller displays, on the display, the plurality of time zones in an order, color, or size according to evaluation performed by the evaluating unit.

8. The image forming apparatus according to Claim 7, wherein
the accepting unit accepts, from the user, designation of a process to be executed by the execution unit, and
the evaluating unit evaluates the plurality of time zones in accordance with the process indicated in the designation accepted by the accepting unit.

9. A control method performed by a computer, the method comprising:
identifying a user and an attribute of the user;
accepting designation of a time zone from the user; and
displaying, on a display, information indicating a fee in a case where the user causes an execution unit to execute a process, the execution unit executing a process at a fee in accordance with a time zone and an attribute.

10. The control method according to Claim 9, the computer including a memory that stores the information indicating a fee, wherein
the displaying obtains the information from a server apparatus in a case where the memory does not store the information, and
in a case where the memory stores the information and the server apparatus includes information newer than the information, the displaying obtains the new information from the server apparatus and displays the new information.

11. The control method according to Claim 9 or 10, the method further comprising:
evaluating a plurality of time zones by comparing the information indicating a fee for each of the plurality of time zones,
wherein the displaying displays, on the display, the plurality of time zones in an order, color, or size according to evaluation performed by the evaluating.

12. The control method according to Claim 11, wherein
the accepting accepts, from the user, designation of a process to be executed by the execution unit, and
the evaluating evaluates the plurality of time zones in accordance with the process indicated in the designation accepted by the accepting.

13. A program causing a computer to function as:
an identifying unit that identifies a user and an attribute of the user;
an accepting unit that accepts designation of a time zone from the user; and
a display controller that displays, on a display, information indicating a fee in a case where the user causes an execution unit to execute a process, the execution unit executing a process at a fee in accordance with a time zone and an attribute.
